# EUROPEAN PATENT SPECIFICATION

(11) **EP 0 420 696 B1**
(45) Date of publication and mention of the grant of the patent: **29.11.1995**
(21) Application number: 90310689.6
(22) Date of filing: 28.09.1990
(51) Int. Cl.: G11B 7/085, G11B 7/09

(54) **Tracking control circuitry for an optical disk unit**
Spurfolgkreis für optische Scheibeeinheit
Circuit de suivi de piste pour unité de disque optique

(30) Priority: 29.09.1989 JP 253982/89; 12.12.1989 JP 321911/89
(43) Date of publication of application: 03.04.1991
(73) Proprietor: FUJITSU LIMITED, Kawasaki-shi, Kanagawa 211 (JP)
(72) Inventor: Yanagi, Shigenori, Kawasaki-shi, Kanagawa 211 (JP)
(74) Representative: Fane, Christopher Robin King

(56) References cited:
- EP-A- 0 270 357
- EP-A- 0 290 024
- EP-A- 0 304 932
- EP-A- 0 306 179
- EP-A- 0 322 841
- US-A- 4 837 757

## Description

The present invention relates to tracking control circuitry for an optical disc unit and in particular to tracking control circuitry having a double servo arrangement.

In an optical disc unit, a track pitch can be set to be as small as several microns. Therefore, the storage capacity of such an optical disc unit can be very great. For this reason optical disc units are suitable for use as large capacity storage devices for computer systems and so forth.

An optical disc unit typically includes an optical head which has an actuator carrying an object lens. The actuator has a moving part for moving a light beam spot to a target position on an optical disc medium supported rotatably by the unit. The actuator may be mounted on a positioner driven by a voice-coil motor (VCM). Therefore, in the following, such a positioner is also referred to as a VCM positioner. One type of actuator, known as a two-dimensional actuator, has a moving part comprising, for example, an arm and an object lens attached to an end of the arm. In the two-dimensional actuator, tracking control is carried out by rotating the arm around a centre shaft of the actuator to move the lens. In this way, the arm serves as a beam-deflecting member for moving the light beam across tracks on the disc medium, and focusing control is carried out by moving the arm longitudinally along the shaft.

To move the object lens to the target position, there are three kinds of control operation, i.e. a coarse control, a lens-seek control, and a fine control. In the coarse control, the VCM positioner is controlled by the voice-coil motor VCM and the focusing control is effected on the two-dimensional actuator. The tracking control of the actuator is not effected in the coarse control. In the lens-seek control, the actuator is controlled to move the object lens over 20 to 30 tracks to the target position. Independent from the lens-seek control, the positioner is controlled by a positioner servo circuit in an attempt to maintain the actuator arm (carrying the object lens) at a neutral position with respect to the positioner, for reasons set out below. Thus, the control of the VCM positioner and the control of the actuator are carried out by separate servo loops together constituting a double servo arrangement. In the fine control, the tracking control is effected on the object lens rotatably mounted on the two-dimensional actuator and the VCM positioner is also controlled to follow the movement of the object lens.

In the coarse control, the two-dimensional actuator can access a track by moving the positioner over a relatively wide range of tracks. After the coarse control, the lens-seek control for moving a light beam to a target track position is carried out by controlling the velocity of the actuator. During the lens-seek control, the positioner is controlled independently of the actuator by the positioner servo circuit so as to keep the position of the actuator at the neutral position with respect to the positioner. Upon the light beam reaching the target track position, the control is switched to the fine control that is carried out according to a track error signal. During this fine control of the object lens on the actuator, a deviation and direction of the object lens from the neutral position with respect to the VCM positioner are monitored by a position sensor, and the positioner is controlled by driving the voice-coil motor (VCM) to cause the object lens to tend towards the neutral position with respect to the positioner. In this way, double servo control, i.e. the control of the moving beam-deflecting member of the actuator and the control of the positioner, is achieved. The beam-deflecting member is preferably kept at a neutral working position because the roundness of a beam spot tends to deteriorate, having an undesirable influence on a read/write operation, if the beam deviates from the neutral position. Ideally a read/write operation should be carried out only when the centre of the light beam focuses correctly on the target position.

In order not to respond rapidly to mechanical play in the structure of the actuator, a servo frequency for the positioning control of the VCM positioner is typically set very low. This causes a large tracking delay of the movement of the VCM positioner with respect to a servo operation of the actuator during a seek operation, so that it may take a long time after a light beam reaches a target track until the beam-deflecting member of the actuator is returned to the neutral working position by the positioning control.

As a result a long settling time may be needed after the-completion of the lens seek operation until the read/write enable state is established, owing to the tracking delay of the positioner driven by the VCM. This hinders high-velocity accessing.

According to the present invention there is provided tracking control circuitry of an optical disk drive unit including an optical head, movable controllably across a main face of a rotatable optical disk when the unit is in use, for providing an optical beam to be incident at a location on the said main face, and including an actuator device, movable with the said optical head, having a beam-deflecting member that is controllably displaceable relative to the said optical head, from a working disposition permitting reading and writing operations using the optical beam, to cause the point of incidence of the optical beam on the said main face to be moved towards a desired location thereon;
which circuitry comprises:
seek means for providing an actuator control signal derived from a target beam-deflecting velocity signal and an actual beam velocity signal, the actuator control signal being used to control the velocity at which the beam-deflecting member is so displaced, during a seek operation of the unit, to cause the point of incidence of the said optical beam to be moved to the said desired location;
tracking servo means operative to take over control of such displacement of the said beam-deflecting member relative to the said optical head, when such a seek operation has been completed, for counteracting subsequent deviation of the said point of incidence from the said desired location on the said main face; and
head positioner servo means for moving the said optical head in accordance with a drive signal dependent upon such displacement of the beam-deflecting member, in such a way as to tend to reduce the magnitude of the displacement of the said beam-deflecting member, from its said working disposition, that is needed to maintain the said point of incidence at the said desired location;
characterised by head velocity control means operative during the said seek operation, to provide a head velocity modification signal, derived from either the said target beam-deflecting velocity signal or the said actual beam velocity signal and to employ that modification signal to modify the said drive signal during the said seek operation so as to increase the rapidity with which the optical head moves, to cause such displacement to be reduced, in response to a change in the said target beam-deflecting velocity signal.

The seek means may include velocity signal generating means for deriving the actual beam velocity signal from a tracking error signal produced in the circuitry when it is in use.

The seek means may include remaining track number detection means for monitoring the number of remaining tracks to be crossed by the beam on the disk in order to reach a target track and for informing control means of the circuitry that a seek operation is completed when the number of remaining tracks becomes zero.

In one embodiment, the head velocity control means may include:
positioner velocity detecting means for providing an actual optical head velocity signal;
subtracting means connected for subtracting the actual head velocity signal from the said target beam-deflecting velocity signal to provide the said head velocity modification signal; and
adding means for adding the said head velocity modification signal to the said drive signal during the said seek operation.

In another embodiment, the head velocity control means may include:
positioner velocity detecting means for providing an actual optical head velocity signal;
subtracting means connected for subtracting the actual head velocity signal from the said actual beam velocity signal to provide the said head velocity modification signal; and
adding means for adding the said head velocity modification signal to the said drive signal during the said seek operation.

In another embodiment, the head velocity control means may include:
differential means for differentiating the said actual beam velocity signal to provide the said head velocity modification signal; and
adding means for adding the said head velocity modification signal to the said drive signal during the said seek operation.

In another embodiment, the head velocity control means may include:
differential means for differentiating the said target beam-deflecting velocity signal to provide the said head velocity modifying signal; and
adding means for adding the head velocity modification signal to the said drive signal during the said seek operation.

Embodiments of the present invention may include a two-dimensional actuator having a base forming a fixed portion of the optical head, the said beam-deflecting member being a rotary arm mounted rotatably on a shaft portion of the base and provided with an object lens for focusing the said optical beam onto the said main face, the said rotary arm being rotatable to move the light beam across tracks of the optical disk, and there being mechanical play between that arm and the said shaft.

The operation of such head velocity control means in an embodiment of the present invention can serve to reduce delay in the movement of a VCM positioner during a seek operation, thereby assisting high-velocity accessing.

Reference will now be made, by way of example, to the accompanying drawings in which:
Fig. 1 is a side view of an assembly of an optical head block and a VCM positioner;
Fig. 2 is a schematic diagram showing the construction of the optical head block of Fig. 1;
Fig. 3 is a perspective view showing an actuator component of the optical head block of Fig. 1;
Fig. 4 is a side view of the actuator component of Fig. 3;
Fig. 5A to 5E are timing diagrams illustrating a seek operation carried out by tracking control circuitry not embodying the invention;
Fig. 6 is a block diagram of tracking control circuitry according to a first embodiment of the present invention;
Fig. 7 is a more detailed block diagram of the circuitry of Fig. 6;
Figs. 8A to 8E are timing diagrams illustrating a seek operation carried out by the Fig. 7 circuitry;
Fig. 9 is a schematic diagram showing one form of construction of a tachometer for use with the Fig. 7 circuitry;
Fig. 10 is a circuit diagram of a part of the Fig. 7 circuitry;
Figs. 11A to 11B are waveform diagrams showing respective waveforms generated in the Fig. 7 circuitry during the seek operation;
Fig. 12 is a circuit diagram of a further part of Fig. 7 circuitry;
Fig. 13 is a graph illustrating the relationship between an output signal of the part shown in Fig. 12 and the position of the actuator component of Fig. 3;
Fig. 14 is a block diagram of another part of the Fig. 7 circuitry;
Fig. 15 is a flow chart for explaining the operation of the circuitry shown in Fig. 7;
Fig. 16 is a block diagram of tracking control circuitry according to a second embodiment of the present invention;
Fig. 17 is a more detailed block diagram of the circuitry shown in Fig. 16; and
Figs. 18 to 18F are timing diagrams illustrating a seek operation carried out by the Fig. 17 circuitry.

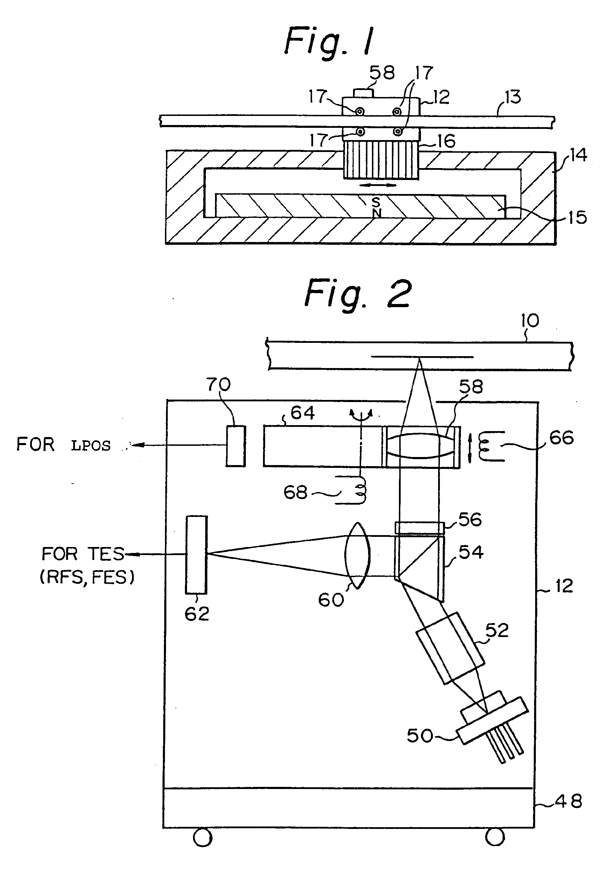

An optical head block and a VCM positioner are first described with reference to Fig. 1. An optical head 12 is movable along a guide rail 13, by means of a magnetic circuit 14, a magnet 15, a voice coil magnet (VCM) positioner 16 adhesively secured to the optical head block 12, and bearings 17 for smoothly transporting the optical head block along the guide rail 13. The optical head 12 includes an object lens 58. By energizing the VCM, the positioner 16 can be moved along the magnetic circuit 14, thereby driving the optical head block 12 along the drive rail 13.

Fig. 2 is a schematic diagram showing more details of an optical head block 12 that may be used in an embodiment of the present invention.

Fig. 2 shows a carriage 48 which is movable (by the VCM positioner 16 of Fig. 1) in a radial direction of an optical disk (disc) 10. The optical head block 12 is mounted on the carriage 48, and includes a semiconductor laser 50, a collimator lens 52 for converting elliptic diffused light from the semiconductor laser 50 into a circular parallel beam, and a polarization beam splitter 54 involving two prisms for passing P-polarized light unchanged and reflecting S-polarized light in a direction orthogonal to the incident direction. A quarter-wavelength plate 56 converts incident linear-polarized light into circular-polarized light and circular-polarized light into linear-polarized light, an object lens 58 directs the light onto the optical disk 10 with an incident beam spot of 1 micrometer or smaller diameter, a condenser lens 60 condenses light, from the optical disk 10, that has been reflected orthogonally by the polarization beam splitter 54, and a quartered photosensor 62 detects tracking error. The quartered photosensor 62 provides an output in response to a light strength pattern of portions where zero-order diffracted light and first-order diffracted light reflected and diffracted by a track guide groove of the optical disk 10 and passed through the condenser lens 60 overlap each other. A push-pull method or a far-field method may be employed to detect a tracking error by means of the quartered photosensor 62. A sum of signals on photosensing portions of the quartered photosensor 62 may provide a high-frequency regenerated signal RFS, and the difference of sums of two diagonal photosensing portions may provide a focusing error signal FES (by an astigmatism method).

The object lens 58 is fitted to a rotary part of a two-dimensional actuator 64. Actuators other than such a two-dimensional actuator could be employed with circuitry embodying the present invention, provided that a double servo control is effected. The rotary part of the actuator 64 is rotated around a rotary shaft by a tracking coil 68, and moved in an axial direction of the rotary shaft by a focusing coil 66. A position sensor 70 is provided to correspond to the actuator 64. In response to an output of the position sensor 70, a direction-position signal LPOS is obtained. The signal LPOS indicates a deviation and direction of the rotary part of the actuator 64 from a reference position which is a neutral working position of that rotating part.

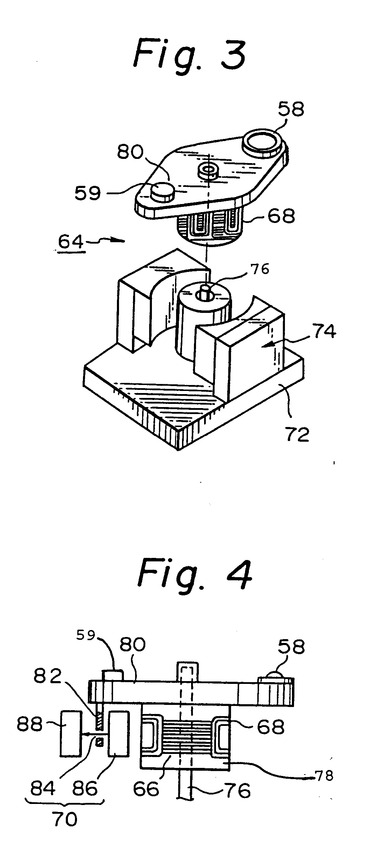

Fig. 3 shows a perspective view of the two-dimensional actuator 64 in the optical head block. Fig. 4 shows the rotary portion of the actuator 64.

In Figs. 3 and 4, the actuator 64 has a base 72 on which a magnetic circuit 74 is fixed. An upright slide shaft 76 is disposed at the centre of the magnetic circuit 74. The base 72 is adhesively secured to the VCM positioner 16 (Fig. 1) and therefore is stationary as long as the VCM positioner 16 does not move, while a rotary arm 80 is movable even when the VCM positioner 16 does not move. The rotary arm 80 is carried by a lower cylindrical portion 78 around which the tracking coil 68 and the focusing coil 66 are disposed. The object lens 58 is mounted at one end of the rotary arm 80, and a balancing weight 59 is mounted at the opposite end of the rotary arm 80. The rotary arm 80 has a centre shaft hole fitted to the slide shaft 76 of the base 72. The rotary arm 80 is rotatable around the shaft and slidable along the shaft.

As shown in Fig. 4, the position sensor 70 is arranged for detecting the rotating direction and rotated amount of the arm 80 relative to the neutral position. The position sensor 70 includes a slit plate 82 fitted to the lower surface of the end of the rotary arm 80 opposite to the object lens 58. The slit plate 82 is formed with a slit 84. A light emitting portion 86 is fixed at an inner side of the sensor 70. The light emitting portion 86 emits light that passes through the slit 84. The emitted light is received by a halved photosensor 88. When the arm 80 is in its neutral position with respect to the VCM positioner, two photosensing portions of the halved photosensor 88 receive equal amounts of light. When the rotary arm 80 turns, however, one of the photosensing portions receives more light and the other photosensing portion receives a smaller amount of light.

Since the rotary arm 80 is rotatable and slidable around and along the slide shaft 76 of the two-dimensional actuator 64, the rotary part of the actuator 64 has a relatively large amount of mechanical play around the shaft. In response to movement of the rotary arm 80 produced by means of the tracking coil 68, the VCM positioner 16 is caused by a servo system to drive the base 72 so as to move the rotary arm 80 to return to the neutral position. A servo frequency band of the servo system for driving the VCM positioner 16 is limited to a very low frequency band of around 30 Hz because of the mechanical play between the rotary arm and the shaft of the base 72.

In an optical disk unit a seek operation can be effected by using a double servo arrangement for the control of the velocity of the two-dimensional actuator 64 mounted on the optical head block 12 and the positioning control of the VCM positioner 16.

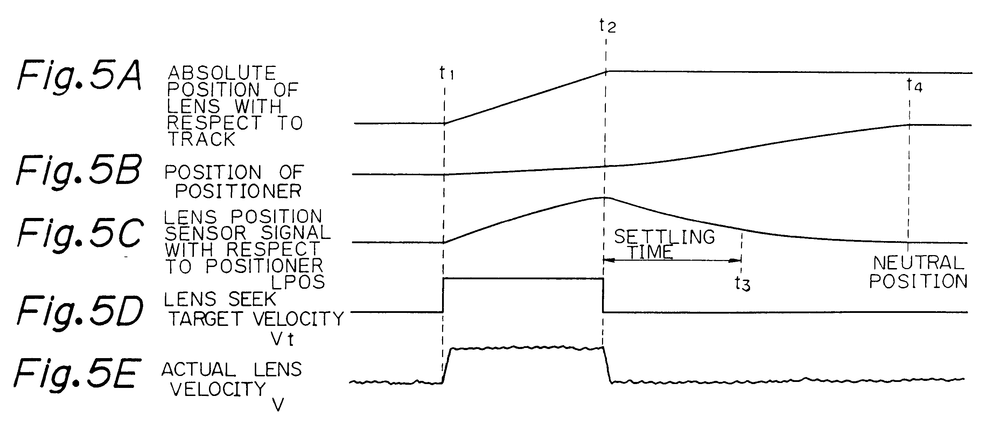

Figs. 5A to 5E are timing diagrams showing a seek operation performed under the control of double servo-tracking control circuitry not embodying the present invention. Fig. 5A shows the absolute position of the lens with respect to the track; Fig. 5B shows the position of the positioner; Fig. 5C shows the lens position sensor signal with respect to positioner; Fig. 5D shows the lens seek target velocity; and Fig. 5E shows the actual lens velocity.

In Figs. 5A to 5E, at a time t1, access to a target track is started. Before the time t1, the optical head is on track and fine control is being carried out by the double servo tracking control provided by the two-dimensional actuator 64, operating on the basis of tracking error signal TES, and the VCM positioner 16 operating on the basis of the direction-position signal LPOS provided by the position sensor 70 cooperating with the two-dimensional actuator. The positioning control by the VCM positioner may be effected on the basis of the tracking error signal TES instead of the direction-position signal LPOS. At the time t1, a seek instruction is provided to switch the system from fine control to lens seek control. The servo control based on the tracking error signal is thereby stopped, and the lens seek control, i.e. velocity control, is started. A velocity error Vₑ is then detected as a difference between a target velocity Vₜ and an actual lens velocity V to control the velocity of the two-dimensional actuator 64 in such a way as to minimise the velocity error Vₑ and achieve the target velocity Vₜ. As a result of this velocity control, the lens reaches the target track position at time t2, and the control is switched again to the fine control.

The above-described seek operation, however, cannot establish a read/write enable state immediately after the lens seek control is switched to the fine control, owing to an undesirably long settling time.

This is because the two-dimensional actuator is structured to be driven around and along a shaft and, therefore, its movable parts have a large amount of mechanical play. Accordingly, in using the direction-position signal LPOS for the positioning servo control of the VCM positioner 16, a servo frequency band employed must be very low, e.g. around 30 Hz.

On the other hand, the servo frequency band associated with the tracking coil of the two-dimensional actuator 64 is typically very high, e.g. of the order of kHz, so that it may provide a very quick motion compared to that provided by the servo of the VCM positioner 16.

As a result, when the seek is completed and the fine control is started at the time t2 in Figs. 5A to 5E, the actuator 64 is greatly displaced from the neutral position as is apparent from the lens position sensor signal LPOS shown in Fig. 5C. Thereafter, the positioning servo by the VCM positioner 16 operates to bring the actuator 64 slowly back to the neutral position. When the actuator returns to the neutral position at time t3, to provide a beam spot which is sufficiently round to carry out a read/write operation, a read/write enable state is established.

Thus, a long settling time is needed after the completion of the lens seek operation until the read/write enable state is established, depending on a tracking delay of the VCM positioner 16. This hinders high-velocity accessing.

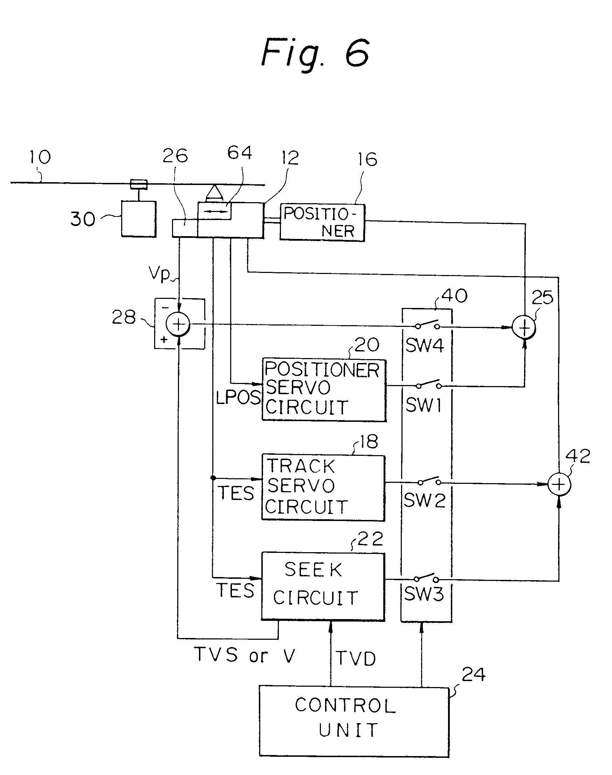

Fig. 6 is a block diagram of tracking control circuitry according to a first embodiment of the present invention.

In Fig. 6, a medium (optical disc) 10 is rotated at a constant velocity. An optical head block 12 records and regenerates information onto and from tracks of the medium 10. The optical head block 12 has a track actuator 64, e.g. a two-dimensional actuator. The track actuator 14 includes a rotary arm, having an object lens for moving a-light beam across several tracks of the medium, as shown in Fig. 3.

Further, the optical head block 12 is moved radially across the disc 10 by a positioner 16.

The rotary arm in the track actuator 64 mounted on the optical head block 12 is controlled by a track servo circuit 18 in such a way as to minimise a tracking error signal TES obtained from a reflected beam from the medium 10.

The positioner 16 is controlled by a head positioner servo circuit 20 in such a way as to minimise a direction-position signal LPOS that indicates a deviation and direction of the rotary arm in the track actuator 64 from a neutral position, or in such a way as to minimise the tracking error signal TES.

In addition, the velocity of the rotary arm in the track actuator 64, i.e. the two-dimensional actuator, is controlled by a seek circuit 22 in dependence upon velocity error of the actual beam velocity with respect to a target beam-deflecting velocity, thereby moving the beam to a target track position.

A control circuit 24 can enable positioning servo control of the positioner 16 by the positioner servo circuit 20 when the circuitry is in use, by maintaining a switch SW1 in an ON state.

During a seek operation, the control circuit 24 puts the track servo circuit 18 in an inoperative state and operates the seek circuit 22. Through cooperative movements of the rotary arm 80 (Fig. 2), in the track actuator 64, and the positioner 16, the light beam from the optical head block 12 is moved to the target track position. When the light beam reaches the target track position, the control circuit 24 puts the seek circuit 22 in an inoperative state, and enables the track servo circuit 18, thereby causing the light beam to be kept on the target track by the double servo action of the rotary arm 80 and the positioner 16.

In this first embodiment of the present invention, in order to keep tracking delay to an acceptable level during a seek operation, even if the positioner servo circuit 20 has a low servo frequency band, a velocity detecting circuit 26 is provided for detecting the actual velocity Vₚ of the moving optical head block 12 driven by the positioner 16, and a positioner velocity control circuit 28 is provided for influencing the velocity of the positioner 16 in response to deviation between either a target beam-deflecting velocity signal TVS (Vₜ) or an actual beam velocity signal V, derived by the seek circuit 22 during the seek operation, and the actual optical head velocity Vₚ obtained by the velocity detecting circuit 26. The positioner velocity control circuit 28 consists of a subtractor for subtracting the actual head velocity Vₚ from the target beam-deflecting velocity signal TVS or from the actual beam velocity signal V.

In addition to the positioning control by the positioner servo (20) during the seek operation, velocity control is carried out to cause any deviation between the target velocity signal TVS (Vₜ) generated for controlling the velocity of the actuator arm, and the actual velocity Vₚ of the optical head, driven by the VCM positioner 16, to tend towards zero. If the VCM positioner is driven at a very low servo frequency, the VCM positioner 16 can move the optical head block 12 in response to a movement of the object lens driven by the track actuator. Accordingly, the rotary arm 80 (see Fig. 3) in the track actuator 64 can be kept substantially at the neutral position with respect to the VCM positioner 16, and the settling time from the completion of seek to the establishment of a read/write enable state can be so small as to facilitate high-velocity accessing.

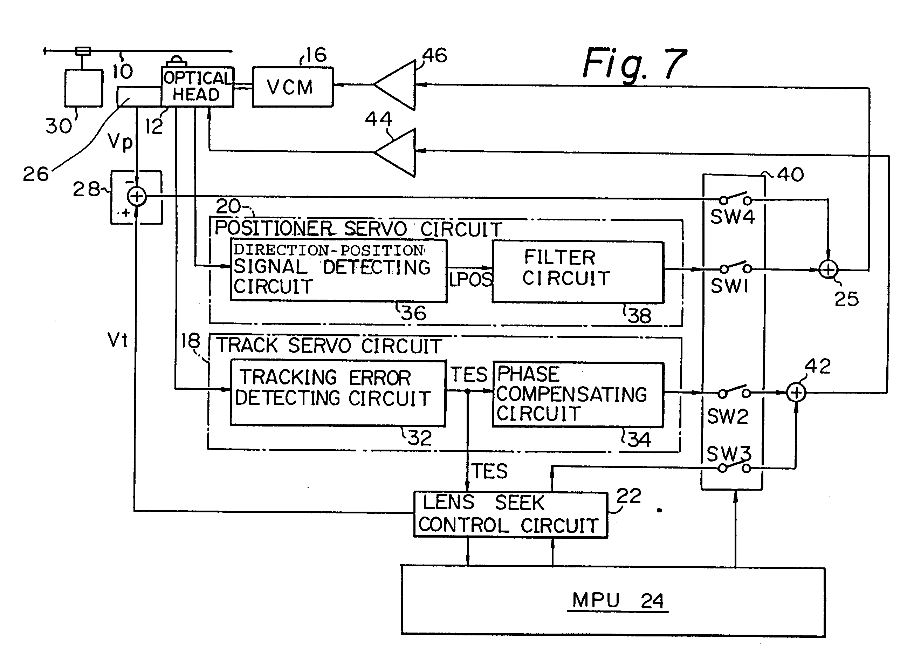

Fig. 7 shows further details of the first embodiment of the present invention, in which an optical disk 10 is rotated by a spindle motor 30 at a constant velocity, for example 3600 rpm. The optical head block 12 is movable radially with respect to the optical disk 10. The base 72 (see Fig. 3) of the optical head block 12 is driven by the VCM positioner 16. The optical head block 12 incorporates a quartered photosensor that receives reflected light from the disk for providing a tracking error signal TES, and a position sensor for detecting a deviation and direction of the rotary arm 80 from a neutral position with respect to the VCM positioner 16. An output of the quartered photosensor is provided to the track servo circuit 18, and an output of the position sensor is provided to the head positioner servo circuit 20.

The track servo circuit 18 includes a tracking error detecting circuit 32 and a phase compensating circuit 34. The tracking error detecting circuit 32 derives the tracking error signal TES from an output of the quartered photosensor arranged in the optical head 12. The phase compensating circuit 34 compensates for a phase advance of the tracking error signal TES with respect to high-frequency-band components of a servo frequency band, and provides a phase-compensated signal to a switch SW2 in the control switch circuit 40, so that the signal can be passed to a power amplifier 44 through an adder 42. An output of the power amplifier 44 drives the tracking coil of the track actuator 64 in the optical head 12.

The positioner servo circuit 20 includes a direction-position signal detecting circuit 36, and a filter circuit 38. The direction-position signal detecting circuit 36 receives an output of, for example, a halved photosensor that detects a deviation of the arm 80 of the track actuator 64, carried in the optical head block 12, from its neutral working position. The circuit 36 generates a direction-position signal LPOS. The filter circuit 38 filters high-frequency-band components of a servo frequency band to suppress the frequency band of the signal LPOS and produce a drive signal which is then supplied to a power amplifier 46 through the switch SW1, in the switch control circuit 40, and the adder 25. The power amplifier 46 drives the VCM positioner 16.

The track servo circuit 18 has a high servo frequency band of 2 to 5 kHz, while the positioner servo circuit 20 has a very low servo frequency band of around 30 Hz due to the mechanical play at the shaft of the two-dimensional actuator 64 (see Fig. 2) disposed in the optical head block 12.

A microprocessing unit (MPU) 24 acts as a control means. The MPU 24 initiates a seek operation by the lens seek control circuit 22 when an access instruction from overall control means of the drive unit is received, and switches the circuitry to fine control mode after completion of the seek operation.

The lens seek control circuit 22 carries out a seek operation to move the rotary arm 80 so as to move a light beam to a target track by controlling the velocity of the arm 80 of the two-dimensional actuator 64 incorporated in the optical head block 12. The MPU 24 provides target beam-deflecting velocity data to the lens seek control circuit 22. In addition, an actual beam velocity V is derived from the tracking error signal TES provided by the tracking error detecting circuit 32. When receiving a seek operation instruction from the MPU 24, the lens seek control circuit 22 subtracts the actual beam velocity V from the target beam-deflecting velocity Vₜ (TVS) to find an error velocity Vₑ, which derives the tracking coil of the two-dimensional actuator 64 disposed in the optical head block 12 through switch SW3 in the control switch circuit 40, an adder 42, and a power amplifier 44.

In order to prevent unacceptable tracking delay of the VCM positioner 16 driven by the positioner servo circuit 20 during a seek operation, the velocity detector 26 and positioner velocity control circuit 28 are provided. The velocity detector 26 detects an actual velocity of the base of the optical head block 12 driven by the VCM positioner 16, i.e. the actual positioner velocity Vₚ. The velocity control circuit 28 comprises a subtractor, which provides an output representative of deviation between the actual positioner velocity Vₚ and either the target beam-deflecting velocity signal Vₜ (TVS) or the actual beam velocity V during a seek operation. This output provides a head velocity modification signal which is passed via switch SW4, of the control switch circuit 40, to the adder 25.

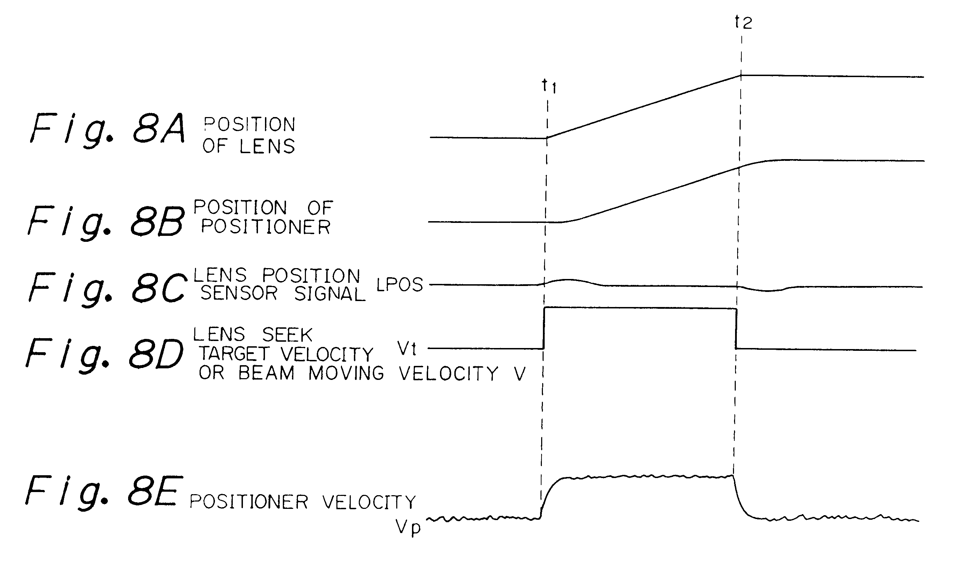

Figs. 8A to 8E are timing diagrams illustrating a seek operation carried out under the control of the Fig. 7 circuitry. The seek operation starts at time t1 and ends at time t2. The lens is positioned at a starting position at time t1, and reaches the target track position at time t2, as shown in Fig. 8A. During the seek period between the times t1 and t2, an appropriate target beam-deflecting velocity Vₜ, or the actual beam velocity V, is generated as shown in Fig. 8D. The velocity of the VCM positioner 16 is controlled in accordance with the target beam-deflecting velocity Vₜ, or the actual beam velocity V, so that the actual velocity Vₚ of the VCM positioner 16 has only a slight rise delay and a slight fall delay with respect to the lens seek target velocity Vₜ, as shown in Fig. 8E. As a result, the position of the positioner 16 follows rapidly the position of the lens, as shown in Fig. 8B. Therefore, only a small fluctuation of the lens position sensor signal, i.e. the direction-position signal LPOS, is produced just after the start of the seek operation and just after the end of the seek operation, as shown in Fig. 8C. Accordingly, when control is switched back from the lens seek control mode to the fine control mode immediately after the time t2, the rotary arm 80 of the two-dimensional actuator (and thereby the object lens) is positioned substantially at the neutral working position with respect to the positioner. Since deviation from the neutral position is very small, the beam spot on the surface of a disk has an acceptable roundness and, therefore, a read/write enable state can be established immediately after the end of the seek operation, at the time t2.

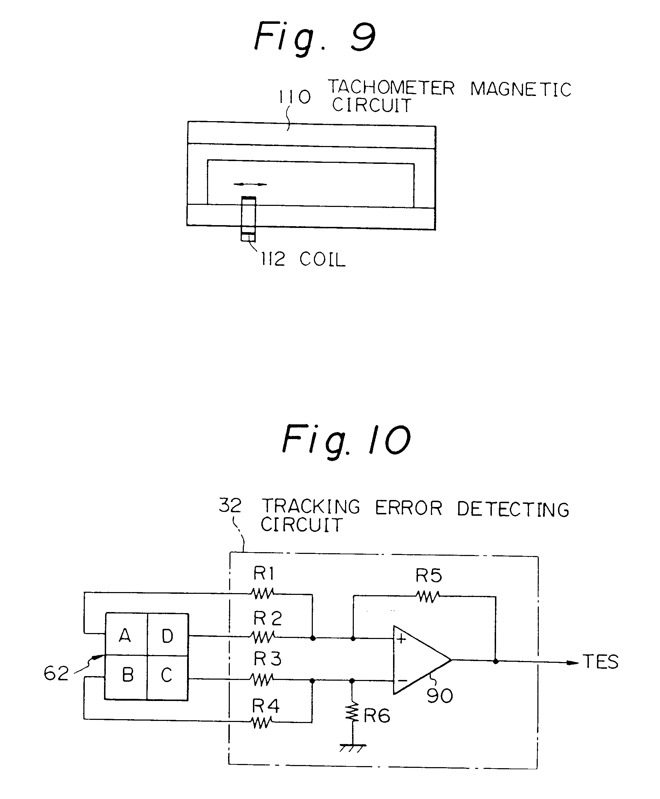

The velocity detector 26 could be a voice coil tachometer, for example as shown in Fig. 9. The voice coil tachometer shown in Fig. 9 includes a tachometer magnetic circuit 110 fixed so as to extend along a diameter of the disk. A coil 112 mounted on the optical head 12 is movable with respect to the tachometer magnetic circuit 110 in the direction of the said diameter, so that an electromotive force corresponding to the velocity of the moving head is induced in the coil 112.

Referring back to Fig. 7, the control switch circuit 40 is controlled by the MPU 24. The switch SW1 is always put in an ON state, in order to effect servo control of the VCM positioner 16 by the positioner servo circuit 20, for both the fine control and lens seek control.

The switch SW2 is turned on for the fine control and off for the lens seek control, so that the track servo circuit 18 is effective only for the fine control in which the two-dimensional actuator and the VCM positioner 16 are driven respectively by the amplifiers 44 and 46, controlled so as to cause the light beam to keep following a track.

In the fine control, the track servo circuit 18 and the positioner servo circuit 20 are simultaneously effective to provide a double servo control.

The switch SW3 is turned off for the fine control, and on for the lens seek control for a seek operation.

The switch SW4 is turned off during positioner seek for very long stroke accessing, i.e. during coarse control, and on for other cases, i.e. during lens seek control and during fine control.

Fig. 10 is a circuit diagram of the tracking error detecting circuit 32 shown in Fig. 7.

A quartered photosensor 62 receives reflected light from the disk medium 10 and has four photosensing portions A, B, C and D. To detect a tracking error, the photosensing portions are grouped in pairs, i.e. a combination of photosensing portions A and D and a combination of photosensing portions B and C. When the beam is focused on the track, the photosensing portions A and D receive an amount of light equal to that received by the photosensing portions B and C. When a light beam deviates from the centre of a track, the amount of light on one combination of the photosensing portions increases, while the amount of light on the other combination decreases.

The outputs of the photosensing portions A and D are added to each other through resistors R1 and R2, and connected to a non-inverted input terminal of a differential amplifier 90. Outputs of the photosensing portions B and C are added to each other through resistors R3 and R4, and connected to an inverted input terminal of the differential amplifier 90. The inverted input terminal of the differential amplifier 90 is connected to an input resistor R6, and an output of the differential amplifier 90 is connected to its non-inverted input terminal through a feedback resistor R5. The input resistor R6 and feedback resistor R5 determine the gain of the amplifier. The differential amplifier 90 subtracts a summed signal of the photosensing portions B and C from a summed signal of the photosensing portions A and D to provide a differential signal as the tracking error signal TES.

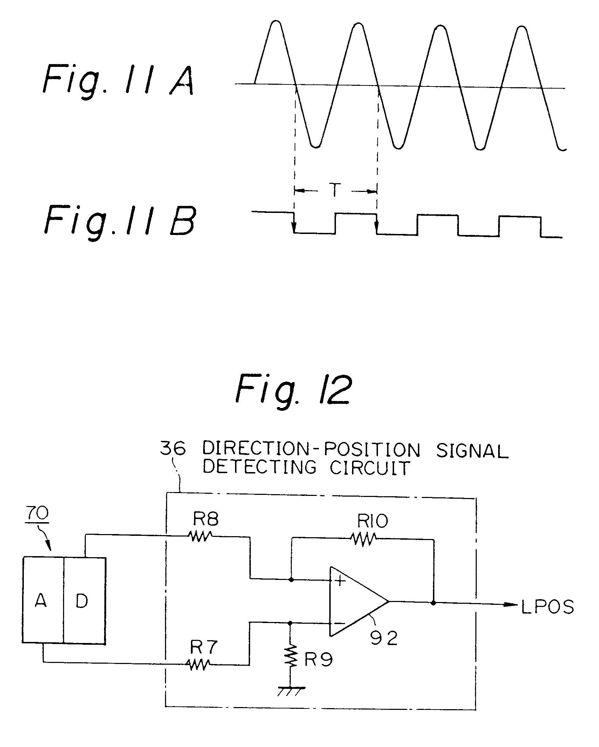

Fig. 11A shows the tracking error signal TES obtainable when a light beam successively crosses tracks during a seek operation under the lens seek control. Fig. 11B shows an output of a zero-crossing comparator that receives the tracking error signal TES. The output signal from the zero-crossing comparator is used to determine the actual beam velocity (V).

Fig. 12 is a schematic view showing an example of the direction-position signal detecting circuit 36 shown in Fig. 7. Position sensor 70 (shown also in Fig. 4) has two photosensing portions A and D. When the actuator arm 80 is at the neutral position, the photosensing portions A and D receive equal amounts of light. When the rotary arm 80 of the actuator 64 (see Fig. 2) turns, one of the photosensing portions receives more light while the other photosensing portion receives less light. Outputs of the photosensing portions A and D are provided to a differential amplifier 92 through resistors R7 and R8. An inverted input terminal of the differential amplifier 92 is connected to an input resistor R9, and the output thereof is connected to a non-inverted input terminal thereof through a feedback resistor R10. The differential amplifier 92 detects the difference of received signals of the photosensing portions A and D, and provides the direction-position signal LPOS.

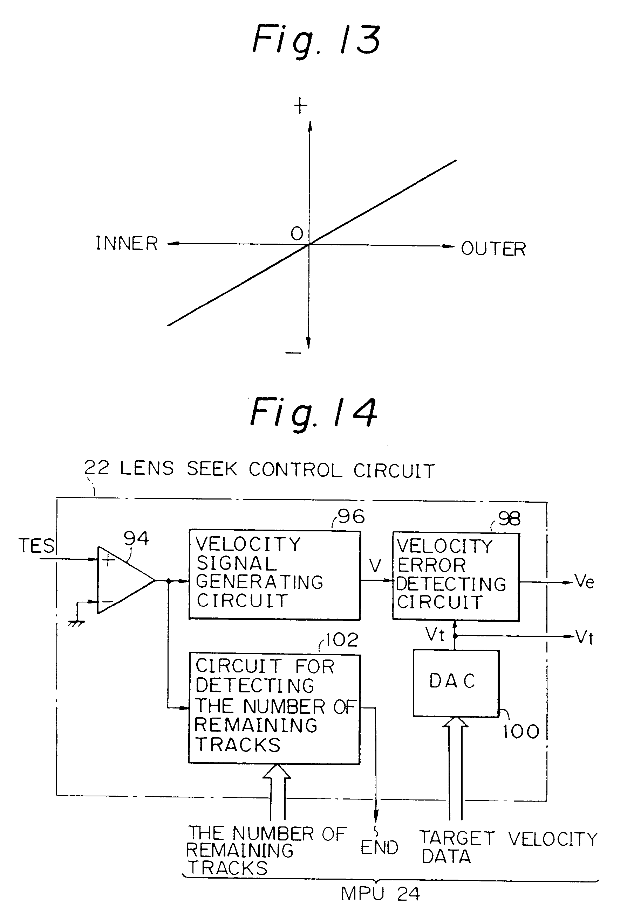

Fig. 13 is a characteristic diagram of the direction-position signal detecting circuit. For example, when the rotary arm of the actuator is turned to the outer side, a positive voltage linearly increasing in response to the amount of turn is generated. When the rotary arm of the actuator is turned to the inner side, a negative voltage linearly increasing in response to the amount of turn is generated. At the neutral position of the rotary arm of the actuator, the voltage is zero.

Fig. 14 is a schematic view showing an example of the lens seek control circuit 22 shown in Fig. 7. A zero-crossing comparator 94 receives the tracking error signal TES from the tracking error detecting circuit 32 and provides a comparison output as shown in Fig. 11B. The output of the zero-crossing comparator 94 is input to a velocity signal generating circuit 96. The velocity signal generating circuit 96 detects a period T of the comparator output shown in Fig. 11B by detecting fall timings of the comparator output. The period T is the time period during which a light beam passes across one track pitch P = 1.6 micrometers. The actual beam velocity V is then calculated as V = P/T. The velocity signal V formed by the velocity signal generating circuit 96 is input to a velocity error detecting circuit 98. Meanwhile, the MPU 24 (Fig. 7) provides target beam-deflecting velocity data to a DA converter (DAC) 100 that converts the data into an analog signal voltage and provides a target beam-deflecting velocity signal Vₜ to the velocity error detecting circuit 98. The circuit 98 subtracts the actual beam velocity V from the target velocity signal Vₜ so as to output a velocity error signal Vₑ.

The target beam-deflecting velocity signal Vₜ output from the DA converter 100, or the actual beam velocity V, is supplied to the positioner velocity control circuit 28 of Fig. 7 and used to reduce tracking delay of the VCM positioner 16.

The lens seek control circuit 22 further includes a circuit 102 (Fig. 14) for detecting the number of remaining tracks. At the time of starting a seek operation, the MPU 24 sets the number of remaining tracks counted from a current track to a target track into the circuit 102. The set number of remaining tracks up to the target track is reduced by one at, for example, each fall of a comparison output of the zero-crossing comparator 94 shown in Fig. 11B. When the light beam reaches the target track, the number of remaining tracks registered in the circuit 102 will be zero, and the circuit 102 informs the MPU 24 of the end of the seek operation.

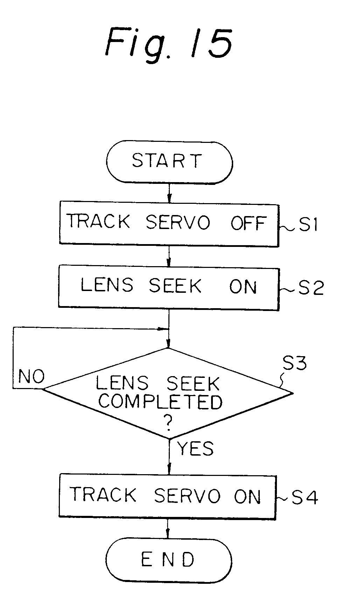

Next, operation of the Fig. 7 circuitry will be explained with reference to an operation flowchart shown in Fig. 15.

First, overall control means of the drive unit supply a read access or write access instruction to the MPU 24. In step S1, the MPU 24 turns off the switch SW2 of the control switch circuit 40, to turn off the track servo of the two-dimensional actuator 64. In step S2, the MPU 24 turns on the switch SW3 to start a seek operation. Thus, fine control, which has been carried out up to that time, is turned off in step S1 and lens seek control is turned on in step S2. When the lens seek operation is started in step S2, the MPU 24 sets target velocity data and the number of remaining tracks up to a target track into the lens seek control circuit 22. At this time, the switch SW1 is in an ON state, so that the positioner servo circuit 20 continues to control the VCM positioner 16.

As shown in Fig. 14, the lens seek control circuit 22 outputs a velocity error signal Vₑ to the power amplifier 44 (see Fig. 7), which drives the tracking coil, thereby controlling the velocity of the rotary arm 80 (see Fig. 3) of the two-dimensional actuator 64 (see Fig. 2) to move a light beam to the target track. When this velocity control is started, the lens seek control circuit 22 provides a target beam-deflecting velocity signal Vₜ (or an actual beam velocity signal V) to the velocity control circuit 28. Since the actual positioner velocity signal Vₚ, output from the velocity detector 26, is zero at first, an acceleration voltage based on the target beam-deflecting velocity signal Vₜ (or the actual beam velocity signal V) is provided to the VCM positioner 16 through the adder 25 and the power amplifier 46. As a result, the VCM positioner 16 accelerates the optical head block 12 towards the target velocity. The velocity Vₚ detected by the velocity detector 26 coincides with the target velocity Vₜ when the acceleration is completed. In this way, the rotary arm of the two-dimensional actuator 64 mounted on the optical head block 12 is kept substantially at its neutral position during the seek operation.

When the number of remaining tracks becomes zero in the lens seek control circuit 22, this is taken in step S3 as indicating the end of the lens seek operation and the switch SW3 is thereupon opened. Thereafter, in step S4, the switch SW2 is closed to start the track servo control. A read/write enable state can be established immediately after the seek operation is completed, without any need to wait for a significant settling time thereafter.

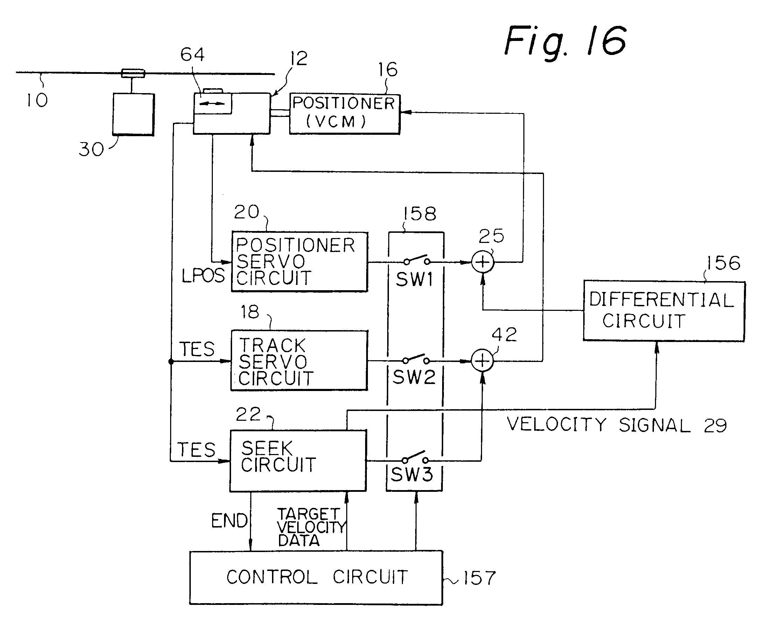

Fig. 16 is a block diagram of tracking control circuitry according to a second embodiment of the present invention.

Fig. 16 circuitry differs from the Fig. 6 circuitry in that the velocity control circuit 28 of Fig. 6 is omitted, and a differential circuit 156 is connected between the seek circuit 22 and the adder 25. As a result of removing the velocity control circuit 28 of Fig. 6, the line connections shown in Fig. 6 between the velocity detector 26 and the velocity control circuit 28, between the seek circuit 22 and the velocity control circuit 28, and between the velocity control circuit 28 and the adder 25, are omitted from Fig. 16. Instead, line connections between the seek circuit 22 and the differential circuit 156, and between the differential circuit 156 and the adder 25, are provided in Fig. 16. Also, in Fig. 16, a switch control circuit 158 includes the three switches SW1, SW2 and SW3, but does not include the switch SW4 shown in Fig. 6. The seek circuit 22 provides a velocity signal 29 which is applied to the differential circuit 156. Other portions are the same in Figs. 6 and 16, and are therefore not described here again in detail.

During a seek operation, the control circuit 157 controls the switch control circuit 158 to render the track servo circuit 18 ineffective (servo OFF) and to render the seek circuit 22 effective (servo ON). With cooperation of the rotary arm of the actuator 64 and the VCM positioner 16, the light beam of the optical head block 12 is moved to the target track position. When the light beam reaches the target track position, the control circuit 157 controls the switch control circuit 158 to render the seek circuit 22 ineffective, and to switch in the track servo circuit 18, so that the light beam is thereafter maintained on the target track by double servo action (18, 20).

In the Fig. 16 circuitry, in order to reduce the tracking delay that could otherwise occur during a seek operation because the head positioner servo circuit 20 is operated at a low servo frequency band, the differential circuit 156 is provided for differentiating the velocity signal output 29 from the seek circuit 22, and the adding circuit 25 is used for adding an output from the differential circuit 156 to a normal drive signal from the positioner servo circuit 20, which drive signal is obtained by applying phase compensation to the direction-position signal LPOS as described below.

The velocity signal to be differentiated by the differential circuit 156 may be the actual beam velocity signal V or the target beam-deflecting velocity signal TVS (Vₜ) from the seek circuit 22.

Thus, a head velocity modification signal obtained by differentiating the target beam-deflecting velocity signal (or the actual beam velocity), during a seek operation, is generated at every fall and rise of the target beam-deflecting velocity signal and added to the drive signal, from the positioner servo circuit 20, that controls the positioner 16. This added signal serves to accelerate or decelerate the VCM positioner. Even if the VCM positioner has a very low servo frequency band, the VCM positioner can be accelerated by such differentiated signals added to the drive signal loop including the optical head block 12, the positioner servo circuit 20, and the VCM positioner 16. Accordingly, the VCM positioner 16 can speedily move and stop following the movement of the track actuator. In this way, a settling time from the completion of seek to the establishment of a read/write enable state can be greatly reduced, thereby realising high-velocity accessing.

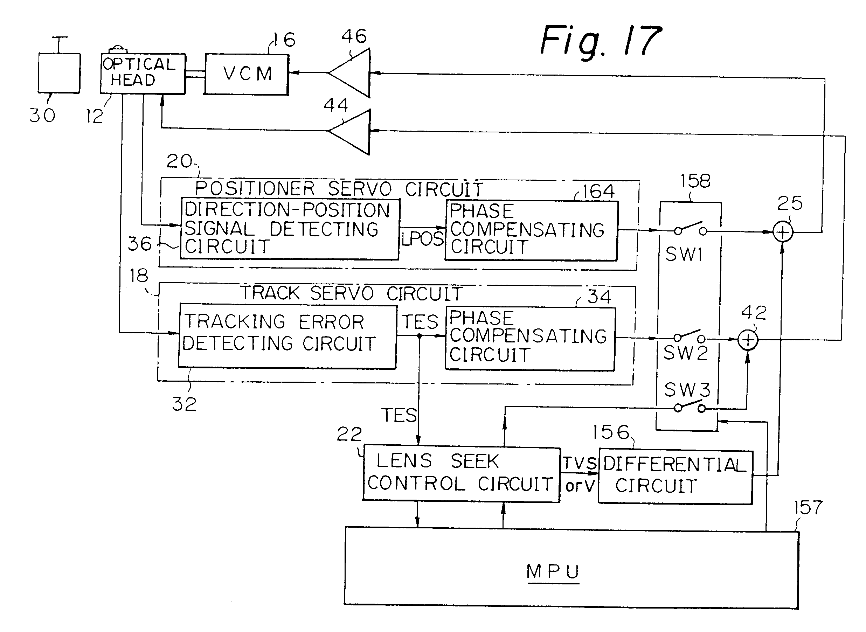

Fig. 17 is a block diagram showing the Fig. 16 circuitry in greater detail.

In Fig. 17, the constitutions of the head positioner servo circuit 20 and the track servo circuit 18 are shown in detail. The track servo circuit 18 includes a tracking error detecting circuit 32, and a phase compensating circuit 34. The tracking error detecting circuit 32 derives a tracking error signal TES from an output of the quartered photosensor 62 (Fig. 10) arranged in the optical head block 12. The phase compensating circuit 34 compensates for phase advance of the tracking error signal TES according to high-frequency-band components of the servo frequency band concerned, and provides the resulting signal to switch SW2, in the control switch circuit 158, for passing the signal to amplifier 44 through adder 42. The output of the power amplifier 44 drives the tracking coil of the two-dimensional actuator incorporated in the optical head block 12.

The positioner servo circuit 20 includes a direction-position signal detecting circuit 36, and a phase compensating circuit 164. The direction-position signal detecting circuit 36 receives an output of, for example, a halved photosensor that detects a deviation of the two-dimensional oscillating track actuator disposed in the optical head block 12 from the neutral position, and the circuit 36 generates a direction-position signal LPOS. The phase compensating circuit 164 compensates for phase advance of high-frequency-band components of a servo frequency band of the signal LPOS. The function of the phase compensating circuit 164 is similar to that of the filter circuit 38 shown in Fig. 7. The output of the phase compensating circuit 164 can be supplied to power amplifier 46 through switch SW1 in the control switch circuit 158 and the adder 25. The power amplifier 46 drives the VCM positioner 16.

The track servo circuit 18 has a relatively high servo frequency band of 2 to 5 kHz, while the positioner servo circuit 20 has a relatively low servo frequency band of around 30 Hz because of the mechanical play at the shaft of the two-dimensional actuator disposed in the optical head block 12.

Microprocessing unit (MPU) 157 acts as a control means and initiates a seek operation when an access instruction from overall control means of the drive unit is received, and switches to fine control after the completion of the seek operation.

Similar to the first embodiment, the seek control circuit 22 carries out a seek operation to move a light beam to a target track by controlling the velocity of the rotary arm of the two-dimensional actuator incorporated in the optical head block 12. The MPU 157 provides target velocity data Vₜ (TVS) to the lens seek control circuit 22. In addition, an actual beam velocity V is derived from the tracking error signal TES provided by the tracking error detecting circuit 32. When receiving a seek operation instruction from the MPU 157, the lens seek control circuit 22 subtracts the actual beam velocity V from the target beam-deflecting velocity Vₜ (TVS) to find a velocity error Vₑ, which drives the tracking coil of the rotary arm in the two-dimensional actuator disposed in the optical head block 12 through switch SW3, in the control switch circuit 158, the adder 42, and the power amplifier 44.

A tracking delay of the VCM positioner 16 driven by the positioner servo circuit 20 during a seek operation is reduced by means of the differential circuit 156 and the adder 25, as described above so that the tracking characteristics of the VCM positioner are approximated closely to the those of the rotary arm in the track actuator 64.

The control switch circuit 158 is controlled by the MPU 157. The switch SW1 is always put in an ON state to effect servo control of the VCM positioner by the positioner servo circuit 20 for both fine control and lens seek control.

The switch SW2 is turned on for fine control and off for lens seek control, so that the track servo circuit 18 is effective only for fine control, used to keep the light beam following a track. When the track servo circuit 18 is effective, the track servo circuit 20 is simultaneously effective to achieve double servo action.

The switch SW3 is turned off for fine control, and on for lens seek control (the seek operation).

Although the flowchart shown in Fig. 15 relates to the operation of the circuitry shown in Fig. 7, this same flowchart can also be taken as illustrating the operation of the circuitry shown in Fig. 17. The difference in operation between the Fig. 7 and Fig. 17 circuitry resides in the step S2. In the Fig. 17 circuitry, when the seek control is started, a rise of the target velocity signal is differentiated by the differential circuit 156, and the resulting output is used as described above to cause the movement of the VCM positioner 16 to be similar to that of the rotary arm of the actuator 64.

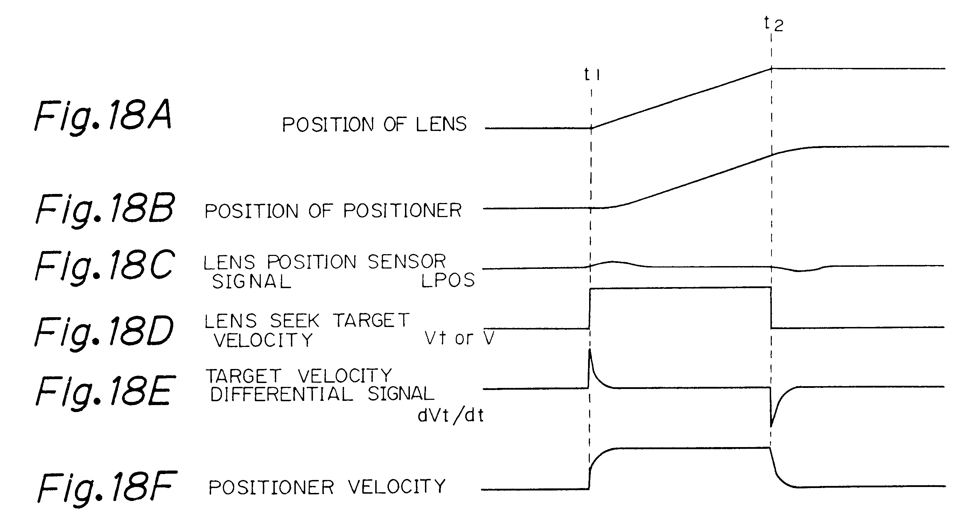

Figs. 18A to 18F are timing diagrams illustrating the seek operation carried out under the control of the Fig. 17 circuitry. The seek operation is started at time t1, and ends at time t2. During the seek period between the times t1 and t2, the lens seek target velocity Vₜ (TVS) is generated. A differentiated signal shown in Fig. 18E and derived by differentiating the target velocity Vₜ is supplied for driving the VCM positioner 16, so that the velocity of the VCM positioner 16 has only a slight rise delay and a fall delay with respect to the lens seek target velocity Vₜ, as can be seen from Fig. 18F. Therefore, a noticeable lens position sensor signal LPOS, which is shown in Fig. 18C and indicates lens displacement with respect to the positioner 16, occurs only just slightly after the start of the seek operation and just after the end of that operation. Accordingly, at the time of switching from seek to fine control, just after the instant t2, the rotary arm of the two-dimensional actuator (and therefore the object lens) is positioned substantially at its neutral working position. The beam spot on the surface of the disk therefore has an acceptable roundness, permitting a read/write enable state to be established just after the end t2 of the seek operation.

Instead of the target beam-deflecting velocity signal (TVS) being differentiated to provide the additional drive signal in the Fig. 17 circuitry, it is possible to differentiate the actual beam velocity signal V for this purpose. In each case it will be appreciated that the addition of the head velocity modification signal, output from the differential circuit 156, to the normal positioner drive signal supplied by the servo circuit 20 serves to increase the rapidity with which the positioner 16 responds to a change in the target beam-deflecting velocity signal TVS (Vₜ), thereby facilitating high-speed accessing in the optical disk unit.

Although both of the above embodiments employ the two-dimensional actuator, an embodiment of the present invention could employ alternative means, for example an actuator such as a galvano-mirror actuator or a relay lens actuator.

## Claims

1. Tracking control circuitry of an optical disk drive unit including an optical head (12), movable controllably across a main face of a rotatable optical disk (10) when the unit is in use, for providing an optical beam to be incident at a location on the said main face, and including an actuator device (64), movable with the said optical head (12), having a beam-deflecting member (80) that is controllably displaceable relative to the said optical head, from a working disposition permitting reading and writing operations using the optical beam, to cause the point of incidence of the optical beam on the said main face to be moved towards a desired location thereon;
which circuitry comprises:
seek means (22) for providing an actuator control signal (Vₑ) derived from a target beam-deflecting velocity signal (TVS, Vₜ) and an actual beam velocity signal (V), the actuator control signal being used to control the velocity at which the beam-deflecting member (80) is so displaced, during a seek operation of the unit, to cause the point of incidence of the said optical beam to be moved to the said desired location;
tracking servo means (18) operative to take over control of such displacement of the said beam-deflecting member (80) relative to the said optical head (12), when such a seek operation has been completed, for counteracting subsequent deviation of the said point of incidence from the said desired location on the said main face; and
head positioner servo means (20, 46, 16) for moving the said optical head (12) in accordance with a drive signal, dependent upon such displacement of the beam-deflecting member, in such a way as to tend to reduce the magnitude of the displacement of the said beam-deflecting member (80), from its said working disposition, that is needed to maintain the said point of incidence at the said desired location;
characterised by head velocity control means (25, 26, 28; 156, 25) operative, during the said seek operation, to provide a head velocity modification signal, derived from either the said target beam-deflecting velocity signal (TVS, Vₜ) or the said actual beam velocity signal (Vₚ), and to employ that modification signal to modify the said drive signal during the said seek operation so as to increase the rapidity with which the optical head (12) moves, to cause such displacement to be reduced, in response to a change in the said target beam-deflecting velocity signal (TVS, Vₜ).

2. Tracking control circuitry as claimed in claim 1, wherein the seek means (22) include velocity signal generating means (96) for deriving the actual beam velocity signal (V) from a tracking error signal (TES) produced in the circuitry when it is in use.

3. Tracking control circuitry as claimed in claim 1 or 2, the said optical disk having data tracks defined thereon, wherein the said seek means (22) include remaining track number detection means (102) for monitoring the number of remaining tracks to be crossed by the beam on the disk in order to reach a target track and for informing control means (24) of the circuitry that a seek operation is completed when the number of remaining tracks becomes zero.

4. Tracking control circuitry as claimed in claim 1, 2 or 3, wherein the head velocity control means include:
positioner velocity detecting means (26) for providing an actual optical head velocity signal (Vₚ);
subtracting means (28) connected for subtracting the actual head velocity signal (Vₚ) from the said target beam-deflecting velocity signal (Vₜ) to provide the said head velocity modification signal; and
adding means (25) for adding the said head velocity modification signal to the said drive signal during the said seek operation.

5. Tracking control circuitry as claimed in claim 1, 2 or 3, wherein the head velocity control means comprise:
positioner velocity detecting means (26) for providing an actual optical head velocity signal (Vₚ);
subtracting means (28) connected for subtracting the actual head velocity signal (Vₚ) from the said actual beam velocity signal (V) to provide the said head velocity modification signal; and
adding means (25) for adding the said head velocity modification signal to the said drive signal during the said seek operation.

6. Tracking control circuitry as claimed in claim 1, 2 or 3, wherein the head velocity control means include:
differential means (156) for differentiating the said actual beam velocity signal (V) to provide the said head velocity modification signal; and
adding means (25) for adding the said head velocity modification signal to the said drive signal during the said seek operation.

7. Tracking control circuitry claimed in claim 1, 2 or 3, wherein the head velocity control means include:
differential means (156) for differentiating the said target beam-deflecting velocity signal (TVS) to provide the said head velocity modifying signal; and
adding means (25) for adding the head velocity modification signal to the said drive signal during the said seek operation.

8. Tracking control circuitry as claimed in any preceding claim, wherein the said actuator device (64) is a two-dimensional actuator having a base (72) forming a fixed portion of the optical head (12), the said beam-deflecting member (80) being a rotary arm mounted rotatably on a shaft portion of the base (72) and provided with an object lens for focusing the said optical beam onto the said main face, the said rotary arm (80) being rotatable to move the light beam across tracks of the optical disk, and there being mechanical play between that arm (80) and the said shaft.

## Patentansprüche

1. Spureinstellungssteuerbeschaltung einer optischen Plattenantriebseinheit mit einem optischen Kopf (12), der steuerbar entlang einer Hauptfläche einer drehbaren optischen Platte (10) bei der Verwendung der Einheit bewegbar ist, um einen optischen Strahl vorzusehen, der auf eine Stelle auf der Hauptfläche einfällt, und mit einer Stellgliedvorrichtung (64), die mit dem optischen Kopf (12) bewegbar ist und ein Strahlablenkungsteil (80) aufweist, welches steuerbar bezüglich des optischen Kopfes auslenkbar ist von einer Arbeitsposition, die Lese- und Schreibvorgänge unter Verwendung des optischen Strahles ermöglicht, um den Einfallspunkt des optischen Strahles auf der Hauptfläche in Richtung auf eine gewünschte Stelle hierauf zu bewegen;
wobei die Beschaltung aufweist:
ein Suchmittel (22) zum Vorsehen eines Stellgliedsteuersignales (Vₑ), welches von einem Zielstrahldeflektionsgeschwindigkeitssignal (TVS, Vₜ) und einem tatsächlichen Strahlgeschwindigkeitssignal (V) abgeleitet wird, welches Stellgliedsteuersignal verwendet wird zur Steuerung der Geschwindigkeit, bei der das Strahlablenkungsteil (80) während eines Suchbetriebes der Einheit derart ausgelenkt wird, daß der Einfallspunkt des optischen Strahles an die gewünschte Stelle bewegt wird;
ein Spureinstellungsservomittel (18) zur Übernahme der Steuerung einer solchen Auslenkung des Strahlablenkungsteils (80) relativ zu dem optischen Kopf (12), nachdem der Suchbetrieb vervollständigt worden ist, um einer aufeinanderfolgenden Abweichung des Einfallspunktes von der gewünschten Stelle auf der Hauptfläche entgegenzuwirken; und
ein Kopfpositioniererservomittel (20, 46, 16) zum Bewegen des optischen Kopfes (12) entsprechend einem Treibersignal in Abhängigkeit einer derartigen Auslenkung des Strahlablenkungsteils auf solche Weise, daß die Größe der Auslenkung des Strahlablenkungsteils (80) von seiner Arbeitsposition der Tendenz nach verringert wird, welche zur Aufrechterhaltung des Einfallspunkes bei der gewünschten Stelle benötigt wird;
gekennzeichnet durch ein Kopfgeschwindigkeitssteuermittel (25, 26, 28; 156, 25) zum Vorsehen während des Suchbetriebes eines Kopfgeschwindigkeitsmodifikationssignales, welches entweder von dem Zielstrahldeflektionsgeschwindigkeitssignal (TVS, Vₜ), oder dem tatsächlichen Strahlgeschwindigkeitssignal (Vₚ) abgeleitet wird, und zum Verwenden des Modifikationssignales zur Modifizierung des Treibersignales während des Suchbetriebes, um die Schnelligkeit zu vergrößern, mit der der optische Kopf (12) bewegt wird, um eine Verringerung der Auslenkung zu bewirken, als Reaktion auf eine Änderung in dem Zielstrahldeflektionsgeschwindigkeitssignal (TVS, Vₜ).

2. Spureinstellungssteuerbeschaltung nach Anspruch 1, bei der das Suchmittel (22) ein Geschwindigkeitssignalerzeugungsmittel (96) zum Ableiten des tatsächlichen Strahlgeschwindigkeitssignales (V) von einem Spureinstellungsfehlersignal (TES) aufweist, welches in der Beschaltung bei der Verwendung erzeugt wird.

3. Spureinstellungssteuerbeschaltung nach Anspruch 1 oder 2, wobei die optische Platte hierauf definierte Datenspuren aufweist, und wobei das Suchmittel (22) ein Restspuranzahlerfassungsmittel (102) zur Überwachung der Anzahl der verbliebenen Spuren, die durch den Strahl auf der Platte überquert werden, um eine Zielspur zu erreichen und zur Information eines Steuermittels (24) der Beschaltung, daß ein Suchbetrieb vervollständigt ist, wenn die Anzahl der verbleibenden Spuren Null wird, aufweist.

4. Spureinstellungssteuerbeschaltung nach Anspruch 1, 2 oder 3, bei der das Kopfgeschwindigkeitssteuermittel aufweist:
ein Positionierergeschwindigkeitserfassungsmittel (26) zum Vorsehen eines tatsächlichen optischen Kopfgeschwindigkeitssignales (Vₚ);
ein Subtrahiermittel (28), welches zum Subtrahieren des tatsächlichen Kopfgeschwindigkeitssignales (Vₚ) von dem Zielstrahldeflektionsgeschwindigkeitssignal (Vₜ) zum Vorsehen des Kopfgeschwindigkeitsmodifikationssignales verbunden ist; und
ein Addiermittel (25) zum Addieren des Kopfgeschwindigkeitsmodifikationssignales mit dem Treibersignal während des Suchbetriebes.

5. Spureinstellungssteuerbeschaltung nach Anspruch 1, 2 oder 3, bei welcher das Kopfgeschwindigkeitssteuermittel aufweist:
ein Positionierergeschwindigkeitserfassungsmittel (26) zum Vorsehen eines tatsächlichen optischen Kopfgeschwindigkeitssignales (Vₚ);
ein Subtrahiermittel (28), welches zum Subtrahieren des tatsächlichen Kopfgeschwindigkeitssignales (Vₚ) von dem tatsächlichen Strahlgeschwindigkeitssignal (V) zum Vorsehen des Kopfgeschwindigkeitsmodifikationssignales verbunden ist; und
ein Addiermittel (25) zum Addieren des Kopfgeschwindigkeitsmodifikationssignales mit dem Treibersignal während des Suchbetriebes.

6. Spureinstellungssteuerbeschaltung nach Anspruch 1, 2 oder 3, bei welcher das Kopfgeschwindigkeitssteuermittel aufweist:
ein Differentialmittel (156) zum Differenzieren des tatsächlichen Strahlgeschwindigkeitssignales (V) zum Vorsehen des Kopfgeschwindigkeitsmodifikationssignales; und
ein Addiermittel (25) zum Addieren des Kopfgeschwindigkeitsmodifikationsignales mit dem Treibersignal während des Suchbetriebes.

7. Spureinstellungssteuerbeschaltung nach Anspruch 1, 2 oder 3, bei welcher das Kopfgeschwindigkeitssteuermittel aufweist:
ein Differentialmittel (156) zum Differenzieren des Zielstrahldeflektionsgeschwindigkeitssignales (TVS) zum Vorsehen des Kopfgeschwindigkeitsmodifizierungssignales; und
ein Addiermittel (25) zum Addieren des Kopfseschwindigkeitsmodifikationssignales mit dem Treibersignal während des Suchbetriebes.

8. Spureinstellungssteuerbeschaltung nach einem der vorhergehenden Ansprüche, bei welcher die Stellgliedvorrichgung (64) ein zweidimensionales Stellglied darstellt mit einer Basis (72), die einen festen Abschnitt des optischen Kopfes (12) bildet, wobei das Strahlablenkungsteil (80) ein Rotationsarm ist, der drehbar auf einem Wellenabschnitt der Basis (72) abgebracht ist und mit einer Objektivlinse zum Fokussieren des optischen Strahles auf die Hauptfläche versehen ist, wobei der Rotationsarm (80) drehbar zur Bewegung des Lichtstrahles über die Spuren der optischen Platte ausgebildet ist, und ein mechanisches Spiel zwischen dem Arm (80) und der Welle vorgesehen ist.

## Revendications

1. Circuit de commande de suivi de piste d'une unité de commande de disque optique incluant une tête optique (12) pouvant se déplacer de manière contrôlée sur une face principale d'un disque optique rotatif (10) lorsque l'unité est utilisée, pour générer un faisceau optique devant arriver au niveau d'un emplacement sur ladite face principale, et incluant un dispositif d'actionneur (64) pouvant se déplacer avec ladite tête optique (12) présentant un élément de déflexion d'un faisceau (80) qui est déplaçable d'une manière contrôlée par rapport à ladite tête optique, à partir d'un état de fonctionnement permettant des opérations de lecture et d'écriture en utilisant le faisceau optique, de commander au point d'incidence du faisceau optique sur ladite face principale d'être déplacé vers un emplacement souhaité sur celle-ci ;
ce circuit comprenant :
des moyens de recherche (22) pour générer un signal de commande d'actionneur (Vₑ) dérivé d'un signal de vitesse de déflexion de faisceau cible (TVS, Vₜ) et un signal de vitesse de faisceau réelle (V), le signal de commande d'actionneur étant utilisé pour commander la vitesse selon laquelle l'élément de déflexion de faisceau (80) est ainsi déplacé, au cours d'une opération de recherche de l'unité, afin de commander au point d'incidence dudit faisceau optique d'être déplacé vers ledit emplacement souhaité ;
des moyens d'asservissement de suivi de piste (18) servant à assurer une commande d'un tel déplacement dudit élément de déflexion de faisceau (80) par rapport à ladite tête optique (12), lorsqu'une telle opération de recherche a été terminée, pour contrecarrer une déviation suivante dudit point d'incidence par rapport audit emplacement souhaité sur ladite face principale ; et
des moyens d'asservissement de positionneur de tête (20, 46, 16) pour déplacer ladite tête optique (12) selon un signal de commande en fonction d'un tel déplacement de l'élément de déflexion de faisceau, de manière à tendre à réduire l'amplitude du déplacement dudit élément de déflexion de faisceau (80), à partir de son dit état de fonctionnement qui est nécessaire pour maintenir ledit point d'incidence au niveau dudit emplacement souhaité ;
caractérisé par des moyens de commande de vitesse de tête (25, 26, 28 ; 156, 25) servant, au cours de ladite opération de recherche, à générer un signal de modification de vitesse de tête, dérivé soit dudit signal de vitesse de déflexion de faisceau cible (TVS, Vₜ), soit dudit signal de vitesse de faisceau réelle (Vₚ), et à utiliser ce signal de modification pour modifier ledit signal de commande au cours de ladite opération de recherche de manière à accroître la vitesse selon laquelle la tête optique (12) se déplace, afin d'agir de manière à ce qu'un tel déplacement soit réduit, en réponse à un changement dudit signal de vitesse de déflexion de faisceau cible (TVS, Vₜ).

2. Circuit de commande de suivi de piste selon la revendication 1, dans lequel les moyens de recherche (22) incluent des moyens de génération de signal de vitesse (96) pour dériver le signal de vitesse de faisceau réelle (V) d'un signal d'erreur de suivi de piste (TES) généré dans le circuit lorsqu'il est en fonctionnement.

3. Circuit de commande de suivi de piste selon la revendication 1 ou 2, ledit disque optique comportant des pistes de données définies sur celui-ci, dans lequel lesdits moyens de recherche (22) incluent des moyens de détection de nombre de pistes restantes (102) pour surveiller le nombre de pistes restantes devant être traversées par le faisceau sur le disque afin d'atteindre une piste cible et pour informer des moyens de commande (24) du circuit qu'une opération de recherche est terminée lorsque le nombre de pistes restantes devient égal à zéro.

4. Circuit de commande de suivi de piste selon la revendication 1, 2 ou 3, dans lequel les moyens de commande de vitesse de tête incluent :
des moyens de détection de vitesse de positionneur (26) pour générer un signal de vitesse de tête optique réelle (Vₚ) ; des moyens de soustraction (28) connectés de manière à soustraire le signal de vitesse de tête réelle (Vₚ) dudit signal de vitesse de déflexion de faisceau cible (Vₜ) pour générer ledit signal de modification de vitesse de tête ; et
des moyens d'addition (25) pour additionner ledit signal de modification de vitesse de tête audit signal de commande au cours de ladite opération de recherche.

5. Circuit de commande de suivi de piste selon la revendication 1, 2 ou 3, dans lequel les moyens de commande de vitesse de tête comprennent :
des moyens de détection de vitesse de positionneur (26) pour générer un signal de vitesse de tête optique réelle (Vₚ) ;
des moyens de soustraction (28) connectés de manière à soustraire le signal de vitesse de tête réelle (Vₚ) dudit signal de vitesse de faisceau réelle (V) pour générer ledit signal de modification de vitesse de tête ; et
des moyens d'addition (25) pour additionner ledit signal de modification de vitesse de tête audit signal de commande au cours de ladite opération de recherche.

6. Circuit de commande de suivi de piste selon la revendication 1, 2 ou 3, dans lequel les moyens de commande de vitesse de tête incluent :
des moyens de différentiation (156) pour différentier ledit signal de vitesse de faisceau réelle (V) pour générer ledit signal de modification de vitesse de tête ; et
des moyens d'addition (25) pour additionner ledit signal de modification de vitesse de tête audit signal de commande au cours de ladite opération de recherche.

7. Circuit de commande de suivi de piste selon la revendication 1, 2 ou 3, dans lequel le moyen de commande de vitesse de tête inclut :
des moyens de différentiation (56) pour différentier ledit signal de vitesse de déflexion de faisceau cible (TVS) pour générer ledit signal de modification de vitesse de tête ; et
des moyens d'addition (25) pour additionner le signal de modification de vitesse de tête audit signal de commande au cours de ladite opération de recherche.

8. Circuit de commande de suivi de piste selon l'une quelconque des revendications précédentes, dans lequel ledit dispositif d'actionneur (64) est un actionneur bidimentionnel comportant une base (72) formant une partie fixe de la tête optique (12), ledit élément de déflexion de faisceau (80) étant constitué par un bras rotatif monté de façon tournante sur une partie d'arbre de la base (72) et muni d'un objectif pour focaliser ledit faisceau optique sur ladite face principale, ledit bras rotatif (80) étant susceptible de tourner pour déplacer le faisceau lumineux sur des pistes du disque optique, et un jeu mécanique existant entre ce bras (80) et ledit arbre.
